# EUROPEAN PATENT APPLICATION

(11) **EP 4 307 600 A2**
(43) Date of publication of application: **17.01.2024**
(21) Application number: 23212514.6
(22) Date of filing: 23.10.2020
(51) Int. Cl.: H04L 5/00

(54) **HYBRID AUTOMATIC REPEAT REQUEST METHOD, SEMI-PERSISTENT SCHEDULING METHOD, AND COMMUNICATION APPARATUS**

(62) Divisional of application: 20958330.1
(71) Applicant: JRD Communication (Shenzhen) Ltd, Shenzhen, Guangdong 518052 (CN)
(72) Inventor: YIN, Xiaoxue, Shenzhen, 518052 (CN); SHENG, Jia, Shenzhen, 518052 (CN)
(74) Representative: Murgitroyd & Company

(57) **Abstract**

A HARQ feedback method is provided and includes: configuring, by a base station, a first timing parameter for a user equipment (UE), wherein the first timing parameter is configured to indicate a time interval between a first time unit for the UE receiving a downlink transmission and a second time unit for the UE transmitting a HARQ feedback signal of the downlink transmission to the base station; determining, by the base station, that a collision occurs in an attempt to transmit the HARQ feedback signal by the UE; and transmitting, by the base station, downlink control information (DCI), which carries a second timing parameter, to the UE, wherein the second timing parameter is different from the first timing parameter and is configured to adjust the second time unit to avoid the collision. The present disclosure further provides SPS methods, related paging apparatuses and non-transitory storage mediums.

## Description

### TECHNICAL FIELD

The present disclosure relates to the field of communication, and in particular to a hybrid automatic repeat request method, a semi-persistent scheduling method, and a communication apparatus.

### BACKGROUND

Wireless communication systems and networks have developed towards being a broadband and mobile system. In cellular wireless communication systems, a user equipment (UE) is connected through a wireless link to a radio access network (RAN) . The RAN includes a set of base stations (BSs) . The set of base stations may provide wireless links to a plurality of UEs located in cells covered by the set of base stations. The set of base stations may further provide an interface to a core network (CN) which provides overall network control. As will be appreciated each of the RAN and CN may conduct respective functions in relation to the overall network.

The 3rd Generation Partnership Project (3GPP) has developed the so-called Long Term Evolution (LTE) system, namely, an Evolved Universal Mobile Telecommunication System Territorial Radio Access Network, (E-UTRAN) , for a mobile access network where one or more macro-cells are supported by a base station known as an eNodeB or eNB (evolved NodeB) . More recently, LTE is evolving further towards the so-called 5G or NR (new radio) systems where one or more cells are supported by a base station known as a gNB.

When the UE receives Physical Downlink Shared Channel (PDSCH) in slot n, the UE transmits Physical Uplink Control Channel (PUCCH) with Hybrid Automatic Repeat reQuest (HARQ) feedback signal for the PDSCH in slot n+ K1, where K1 is a number of slots indicated by corresponding DCI or provided by higher layer signal. If there is no available Uplink (UL) resource in slot n+K1 due to confliction, UE cancels the PUCCH transmission carrying the HARQ feedback signal for the PDSCH received in slot n. When confliction occurs frequently, the HARQ feedback signal may be dropped frequently accordingly, affecting performance of the PDSCH.

### SUMMARY

The present disclosure is to provide a HARQ feedback method, a semi-persistent scheduling method, a communication apparatus and a non-transitory storage medium.

According to a first aspect of the disclosure, a HARQ feedback method is provided and includes following blocks.

A base station figures a first timing parameter for a user equipment (UE) , wherein the first timing parameter is configured to indicate a time interval between a first time unit for the UE receiving a downlink transmission and a second time unit for the UE transmitting a HARQ feedback signal of the downlink transmission to the base station.

The base station determines that a confliction occurs in an attempt to transmit the HARQ feedback signal by the UE.

The base station transmits downlink control information (DCI) , which carries a second timing parameter, to the UE. The second timing parameter is different from the first timing parameter and is configured to adjust the second time unit to avoid the confliction.

According to a second aspect of the disclosure, a HARQ feedback method is provided and includes following blocks.

A user equipment (UE) receives a first timing parameter transmitted by a base station. The first timing parameter is configured to indicate a time interval between a first time unit for the UE receiving downlink transmission and a second time unit for the UE transmitting a HARQ feedback signal of the downlink transmission to the base station.

The UE receives downlink control information (DCI) which carries a second timing parameter and is transmitted by the base station. The second timing parameter is different from the first timing parameter and is configured to adjust the second time unit to avoid confliction occurring in an attempt to transmit the HARQ feedback signal by the UE.

The UE transmits the HARQ feedback signal of the downlink transmission to the base station at an adjusted second time unit.

According to a third aspect of the disclosure, a HARQ feedback method is provided. The method includes following blocks.

A base station determines that a user equipment (UE) has at least one cancelled HARQ feedback signal, wherein the at least one cancelled HARQ feedback signal is cancelled due to confliction.

The base station transmits a retransmission message and retransmission resource configuration information to the UE.

The base station receives the at least one cancelled HARQ feedback signal, which is transmitted by the UE using the retransmission resource in response to the retransmission triggering message.

According to a fourth aspect of the disclosure, a HARQ feedback method is provided. The method includes following blocks.

A base station transmits transmission information of semi-persistent scheduling (SPS) to a user equipment (UE) . The transmission information of SPS is configured to indicate whether at least one SPS resource has actual downlink transmission.

The base station detects only a hybrid automatic repeat request (HARQ) feedback signal corresponding to the at least one SPS resources having actual downlink transmission, while skips an operation of detecting a HARQ feedback signal corresponding to a SPS resource without actual downlink transmission.

According to a fifth aspect of the disclosure, a semi-persistent scheduling (SPS) method is provided. The method includes following blocks.

A base station transmits transmission information of semi-persistent scheduling (SPS) to a user equipment (UE) . The transmission information of SPS is configured to indicate whether at least one SPS resource has actual downlink transmission.

The base station detects only a hybrid automatic repeat request (HARQ) feedback signal corresponding to the at least one SPS resources having actual downlink transmission, and skips an operation of detecting a HARQ feedback signal corresponding to a SPS resource without actual downlink transmission.

According to a sixth aspect of the disclosure, a semi-persistent scheduling (SPS) method is provided. The method includes following blocks.

A UE receives transmission information of semi-persistent scheduling (SPS) transmitted by a base station. The transmission information of SPS is configured to indicate whether at least one SPS resource has actual downlink transmission.

The UE transmits a hybrid automatic repeat request (HARQ) feedback signal corresponding to the at least one SPS resource having actual downlink transmission to the base station, while skipping a feedback signal corresponding to a SPS resource without actual downlink transmission.

According to a seventh aspect of the disclosure, a communication apparatus is provided and includes a processor and a communication circuit. The processor is connected to the communication circuit; and the processor is configured to execute an instruction to perform the method provided by any one of the first, fourth and fifth aspect of the disclosure.

According to an eighth aspect of the disclosure, a communication apparatus is provided and includes a processor and a communication circuit. The processor is connected to the communication circuit; and the processor is configured to execute an instruction to perform the method provided by any one of the second, third and sixth aspect of the disclosure.

According to a ninth aspect of the disclosure, a non-transitory storage medium is provided and is configured to store an instruction. The instruction is capable of being executed to perform the method provided by any one of the first, fourth and fifth aspect of the disclosure.

According to a tenth aspect of the disclosure, a non-transitory storage medium is provided and is configured to store an instruction. The instruction is capable of being executed to perform the method provided by any one of the second, third and sixth aspect of the disclosure.

According to the present embodiment, in response to the confliction occurring in transmitting the HARQ feedback signal, a new timing parameter (i.e., the second timing parameter) may be configured to adjust the second time unit for the UE to transmit the HARQ feedback signal. In this way, a possibility of the HARQ feedback signal being dropped due to the confliction may be reduced, and the performance of PDSCH (such as SPS PDSCH) may be improved.

### BRIEF DESCRIPTION OF THE DRAWINGS

FIG. 1 is a diagram of a wireless communication system or network according to an embodiment of the present disclosure.
FIG. 2 is a flow chart of a HARQ feedback method according to an embodiment of the present disclosure.
FIG. 3 is a flow chart of a HARQ feedback method according to another embodiment of the present disclosure.
FIG. 4 is a flow chart of a HARQ feedback method according to yet another embodiment of the present disclosure.
FIG. 5 is a flow chart of a HARQ feedback method according to yet another embodiment of the present disclosure.
FIG. 6 is a flow chart of a SPS method according to an embodiment of the present disclosure.
FIG. 7 is a flow chart of a SPS method according to another embodiment of the present disclosure.
FIG. 8 is a structural schematic view of a communication apparatus according to an embodiment of the present disclosure.
FIG. 9 is a structural schematic view of a non-transitory storage medium according to an embodiment of the present disclosure.

### DETAILED DESCRIPTION OF THE PREFERRED EMBODIMENTS

The present disclosure is to be illustrated in details by referring to the accompanying drawings and following embodiments. Embodiments that do not conflict with each other may be combined.

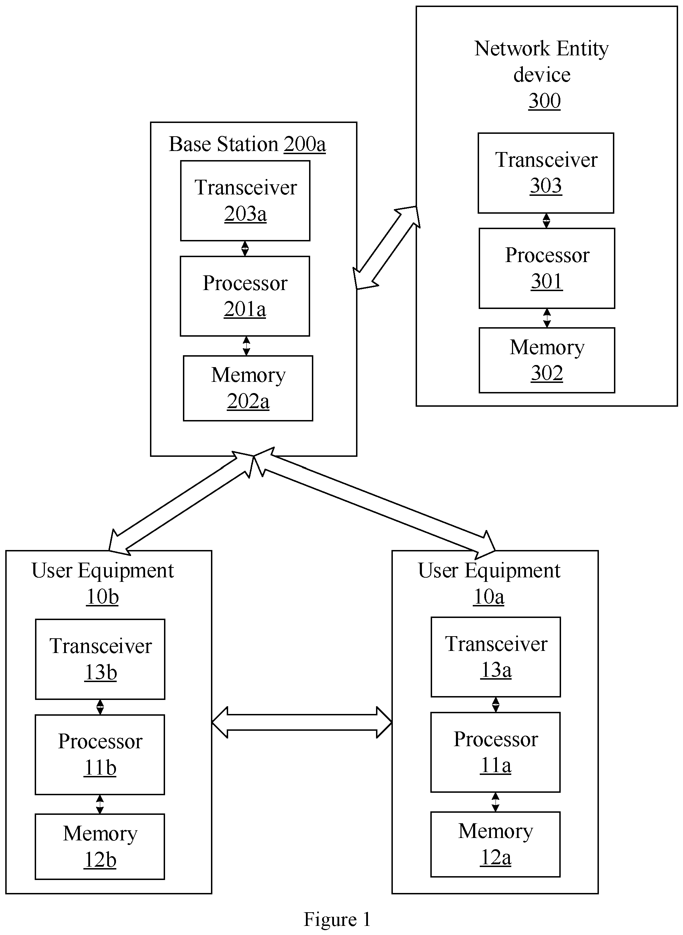

With reference to FIG. 1, a telecommunication system is provided to execute a method according to an embodiment of the present disclosure. The telecommunication system includes a UE 10a, a UE 10b, a base station (BS) 200a, and a network entity device 300. FIG. 1 is shown for illustration not limitation. The number of UEs, the number of BSs, and the number of CN entities in the telecommunication system may be one or more. Connections between devices and device components are shown as lines and arrows in the figures. The UE 10a may include a processor 11a, a non-transitory memory 12a, and a transceiver 13a. The UE 10b may include a processor 11b, a non-transitory memory 12b, and a transceiver 13b. The base station 200a may include a processor 201a, a non-transitory memory 202a, and a transceiver 203a. The network entity device 300 may include a processor 301, a non-transitory memory 302, and a transceiver 303. Each of the processors 11a, 11b, 201a, and 301 may be configured to implement proposed functions, procedures and/or methods described in the present disclosure. Layers of radio interface protocol may be implemented in the processors 11a, 11b, 201a, and 301. Each of the non-transitory memories 12a, 12b, 202a, and 302 operatively stores a variety of programs and information to operate a connected processor. Each of the transceivers 13a, 13b, 203a, and 303 is operatively coupled with a connected processor, transmits and/or receives radio signals or wireline signals. The UE 10a may be in communication with the UE 10b through a sidelink. The base station 200a may be an eNB, a gNB, or one of other types of radio nodes, and may be configured with radio resources for the UE 10a and UE 10b.

Each of the processors 11a, 11b, 201a, and 301 may include an application-specific integrated circuits (ASICs) , other chipsets, logic circuits and/or data processing devices. Each of the non-transitory memories 12a, 12b, 202a, and 302 may include a read-only memory (ROM) , a random access memory (RAM) , a flash memory, a memory card, a storage medium and/or other storage devices. Each of the transceivers 13a, 13b, 203a, and 303 may include baseband circuitry and radio frequency (RF) circuitry to process radio frequency signals. When the embodiments are implemented in software, the techniques described herein can be implemented with modules, procedures, functions, entities and so on, that perform the functions described herein. The modules can be stored in a non-transitory memory and executed by the processors. The memory can be implemented within a processor or external to the processor, in which those can be communicatively coupled to the processor via various means are known in the art.

The network entity device 300 may be a node in a CN. The CN may include LTE CN or 5G core (5GC) which includes user plane function (UPF) , session management function (SMF) , mobility management function (AMF) , unified data management (UDM) , policy control function (PCF) , control plane (CP) /user plane (UP) separation (CUPS) , authentication server (AUSF) , network slice selection function (NSSF) , and the network exposure function (NEF) .

A base station, such as the BS 200a, and a UE, such as the UE 10a or 10b in FIG. 1, may perform an HARQ feedback method and a semi-persistent scheduling (SPS) method of the present disclosure. In the present disclosure, HARQ-ACK or HARQ-ACK feedback represents HARQ feedback signal which may be acknowledgment (ACK) or negative-acknowledgment (NACK). A downlink control information (DCI) format is transmitted from a BS, such as the BS 200a, to a UE, such as the UE 10a or the UE 10b. A radio resource control (RRC) parameter may include a parameter carried in an RRC control signal transmitted from a BS, such as the BS 200a, to a UE, such as the UE 10a or the UE 10b.

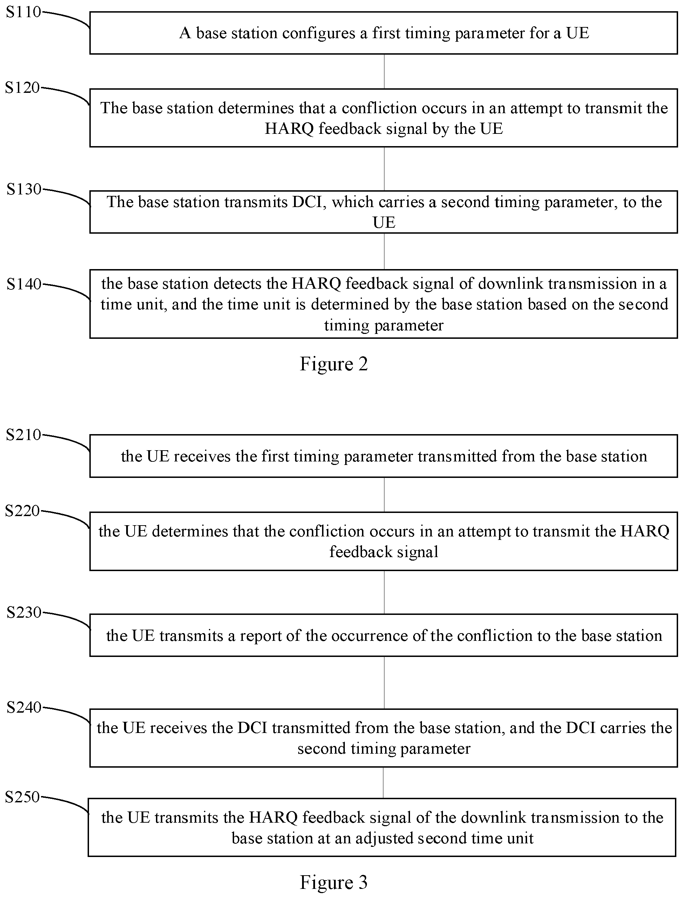

As shown in FIG. 2, a flow chart of a HARQ feedback method according to an embodiment of the present disclosure is shown. In the present embodiment, the method may include following blocks.

At block S 110, the base station may configure a first timing parameter for the UE.

The first timing parameter is configured to indicate a time interval between a first time unit and a second time unit. The UE may receive a downlink transmission in the first time unit and transmit a HARQ feedback signal of the downlink transmission to the base station in the second time unit. A unit of the first time unit and a unit of the second time unit may be a slot, a subframe, or a symbol. When the first time unit and the second time unit are represented by a same unit, the first timing parameter may be configured to indicate the number of unit timing units between the first time unit and the second time unit.

At block S120, the base station may determine that a confliction occurs in an attempt to transmit the HARQ feedback signal by the UE.

In an embodiment, the first timing parameter may be applied in SPS PDSCH. The SPS enables a wireless resource to be scheduled in a semi-persistent manner (such the wireless resource may be referred to as a SPS resource configured for transmitting the PDSCH in the present embodiment) , and periodically configure the SPS resource to the UE. The base station may transmit a SPS configuration message to the UE for configuring the SPS. When the configuration is completed, the base station may transmit a SPS activation message to the UE. After the SPS is activated successfully, the UE may periodically receive the downlink transmission by using the SPS resource. The SPS configuration message or the SPS activation message may include the first timing parameter.

However, in a subsequent process of SPS PDSCH transmission, confliction may occur between an attempt to transmit a HARQ feedback signal of SPS PDSCH by the UE and time division duplex (TDD) configuration, resulting in failure of transmitting the HARQ feedback signal of SPS PDSCH.

In 3GPP Release 15, when a UE is configured with SPS PDSCH, and receives the SPS PDSCH in a slot n, the UE transmits PUCCH with HARQ-ACK for the SPS PDSCH in a slot n+ k1. The k1 referred to as the first timing parameter is a number of slots indicated by a PDSCH-to-HARQ _feedback timing indicator in a corresponding downlink control information (DCI) format. The timing indicator may be provided by dl-DataToUL-ACK or dl-DataToUL-ACKForDCIFormat1_2 for DCI format 1_2 when the PDSCH-to-HARQ_feedback timing indicator field is not present in the DCI format. When no UL resource is available in slot n+k1 due to confliction with TDD configuration, the UE cancels PUCCH transmission carrying the HARQ-ACK for the SPS PDSCH received in the slot n. Further, in 3GPP release 16, shorter SPS periodicity is supported to reduce latency. For each SPS PDSCH, a value of a timing indicator indicated by activated DCI or higher layer control signal is the same. The shorter periodicity of SPS PDSCH may lead to frequent confliction between transmission of HARQ-ACK and non-UL slot or symbol configured with a specific slot format indicated by semi-static or dynamic TDD configuration especially during heavy downlink traffic. 3GPP TS 38.213 clause 11.1.1 defines slot formats. If the procedures in 3GPP standards release 15 is reused, frequent confliction events and HARQ feedback dropping is expectable, which may degrade performance of SPS PDSCH.

The confliction may be discovered by the UE, and subsequently, the UE may transmit a report of the confliction to the base station. Alternatively, since the TDD configuration and the SPS PDSCH configuration are all decided by the base station, the base station may recognize the confliction by itself. In details, the base station may determine the first time unit for each downlink transmission based on the SPS configuration, and further determine occurrence of the confliction based on the first time unit, the first timing parameter, and the TDD configuration. Before the UE discovers the confliction, the base station may realize the occurrence of the conflict based on its own configuration. When updated configuration is given at this time, a performance loss caused by the confliction may be avoided more effectively.

At block S130, the base station may transmit downlink control information (DCI) to the UE, and the DCI may carry a second timing parameter.

The second timing parameter is different from the first timing parameter and is configured to adjust the second time unit to avoid the confliction.

The base station may use a new DCI to indicate second timing parameter (which may be referred to as a new k1). The new DCI may not be configured to schedule uplink or downlink transmission of the UE. That is to say, the DCI which carries the second timing parameter precludes scheduling information of the uplink or downlink transmission of the UE. The first timing parameter and the second timing parameter may be indicated by a same field, such as PDSCH-to-HARQ _feedback.

The new DCI is substantially configured to transmit the second timing parameter to the UE. For SPS PDSCH, all necessary information has been configured in initial DCI. Therefore, the new DCI may be simplified. For simplified DCI, only HARQ or PUCCH related parameters need to be updated, that is to say only HARQ or PUCCH related parameters need to be transmitted to the UE. For example, only the following parameters or part of the following parameters need to be updated according to specific conditions:
- New data indicator
   --Redundancy version
- HARQ process number
- Downlink assignment index
- TPC command for scheduled PUCCH
- PUCCH resource indicator
- PDSCH-to-HARQ_feedback timing indicator

In an embodiment, when the base station notifies relevant configuration through other scheduling, only the PDSCH-to-HARQ _feedback timing indicator may be updated to indicate the second timing parameter. For other parameters in a downlink DCI format, zero padding bits may be added. In another embodiment, in order to save resource overhead, it may be configured by a higher layer parameter to indicate that the simplified DCI is performed, then an operation of simplifying parameters, which are in the simplified DCI and are irrelative to the PUCCH, may be omitted. On the other hand, the simplified DCI may be configured by a new Radio Network Tempory Identity (RNTI) . When the DCI format with CRC is scrambled by the new RNTI, the simplified DCI may be performed and the non-HARQ related bits may be omitted. Further DCI size alignment may be performed, and any mechanism available in the related art for DCI size alignment may be performed and is not limited by the present disclosure.

In an embodiment, a new DCI format may be defined for the new DCI, specifically configured to carry the HARQ or PUCCH related parameters including the second timing parameter.

For example, the base station may use a RRC information element (IE) TimmingIndPerSPSPDSCH to configure the new DCI format. The HARQ or PUCCH related parameters comprised in the TimmingIndPerSPSPDSCH are shown in table 1.

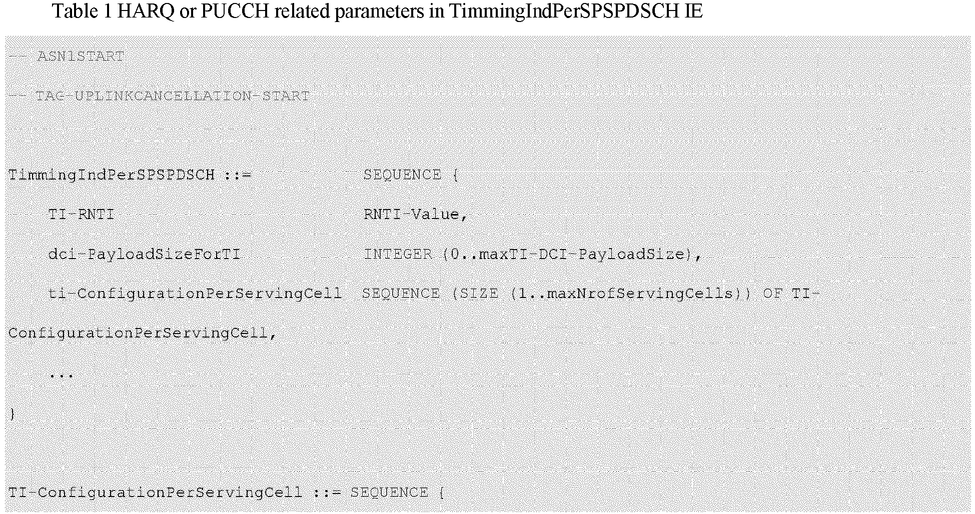

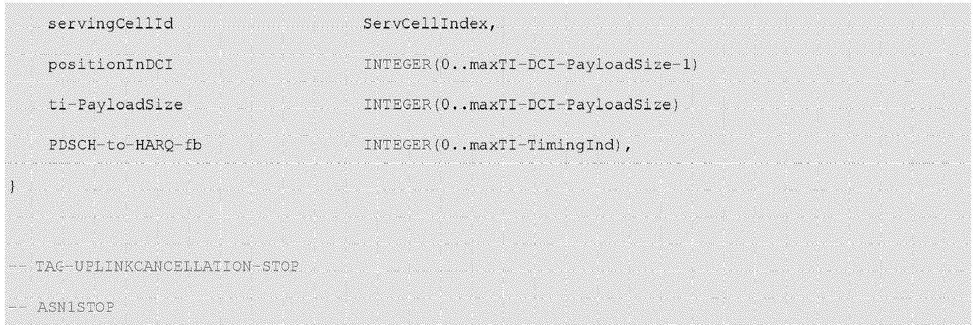

When the UE is provided with TimmingIndPerSPSPDSCH, the UE may be configured with a new RNTI expressed as TI-RNTI, provided by TI (Timing indication) -RNTI for monitoring PDCCH conveying this new DCI format. The dci-PayloadSizeForTI configures the total length of the DCI payload scrambled with TI-RNTI. The ti-PayloadSize configures the field size for each timing indicator for SPS PDSCH of this serving cell (servingCellId) . The PDSCH-to-HARQ-fb provides PDSCH-to-HARQ _feedback timing indicator of each SPS PDSCH. The positionInDCI provides the starting position (in number of bit) of the PDSCH-to-HARQ _feedback timing indicator for each SPS PDSCH within the DCI payload.

An unnecessary signaling overhead may be generated by the new DCI carrying the second timing parameter. Therefore, the second timing parameter may be configured by an existing DCI which used to schedule another PDSCH for the UE. In this case, the second timing parameter may be conveyed to the UE without increasing the signaling overhead.

The second timing parameter may be indicated by adding a field into the DCI, such as a field of PDSCH-to-HARQ feedback Backup. The configuration of the field of PDSCH-to-HARQ _feedback _Backup may reuse a legacy mechanism as a baseline. For example, the field may be configured by a higher layer parameter dl-DataToUL-ACK similar to the PDSCH-to-HARQ _feedback or define a new dl-DataToUL-ACK-Backup specifically for the PDSCH-to-HARQ_feedback_Backup. In order to save signaling, this field can be optional and is only configured when k1 needs to be updated.

Alternatively, an operation of reusing the existing timing indicator field to indicate the second timing parameter in the DCI may be performed.

At block S 140, the base station may detect the HARQ feedback signal of downlink transmission in a time unit, and the time unit is determined by the base station based on the second timing parameter.

After receiving the new k1, the legacy mechanism may be reused for the second timing parameter. When the UE is configured with the DCI carrying the new k1, and the DCI is received in a slot m, the UE transmits PUCCH with HARQ-ACK for the SPS PDSCH in a slot m + new k1. The base station may determine when the PUCCH with HARQ-ACK is to be detected based on the second timing parameter and the time unit at which the DCI carrying the new k1 is transmitted.

However, it may not be clear whether the HARQ-ACK feedback corresponding to the subsequent SPS PDSCH should use the new k1 or the original k1 which leads to the confliction. In the present embodiment, various solutions are provided and will be illustrated in the following.

The first solution is to overwrite the new k1 over the old k1, that is, once a new k1 is configured, after receiving the DCI carrying the k1, the HARQ-ACK feedback responding to the subsequent SPS PDSCH is based on the new indicated k1.

The second solution is that the new k1 is specifically for cancelled HARQ-ACK feedback, which means after transmitting this postpone HARQ-ACK feedback, the HARQ-ACK feedback responding to the following SPS PDSCH still respect to the old k1. In other word, the new k1 is only for one-time use.

The last solution is to keep both the new k1 and the original k1, and the UE can select the appropriate k1 for reporting. Correspondingly, on the base station side, HARQ-ACK detection needs to be performed at two locations.

According to the present embodiment, in response to the confliction occurring in transmitting the HARQ feedback signal, a new timing parameter (i.e., the second timing parameter) may be configured to adjust the second time unit for the UE to transmit the HARQ feedback signal. In this way, a possibility of the HARQ feedback signal being dropped due to the confliction may be reduced, and the performance of PDSCH (such as SPS PDSCH) may be improved.

Alternatively, the HARQ feedback method mentioned in the present embodiment may only be applied for ultra-reliable Low-latency Communications (URLLC) services. Low-priority services may still follow previous releases of a scheme and drop HARQ-ACK if confliction happens. For the new k1, a restriction may be added, and the HARQ-ACK feedback also requires a certain real-time performance and may not allow an indefinite delay. Therefore, a sum of the new k1 and the original k1 does not exceed a maximum support range of the parameter k1. Or, the time interval between the time unit of the final HARQ-ACK transmission and the time unit of the SPS PDSCH corresponding to the conflicting HARQ-ACK cannot exceed the maximum support range of k1.

Ultra-reliable low-latency communication, or URLLC, is one of various types of use cases supported by the 5G NR standard, as stipulated by 3GPP Release 15. URLLC is a communication service for successfully delivering packets with stringent requirements, particularly in terms of availability, latency, and reliability. URLLC will enable supporting the emerging applications and services. Exemplary services may include wireless control and automation in industrial factory environments, inter-vehicular communications for improved safety and efficiency, and the tactile internet. It is of importance for 5G especially considering the effective support of verticals which brings new business to the entire telecommunication industry.

One of key features of URLLC is low latency. The low latency is important for gadgets that drive themselves or perform prostate surgeries. The low latency allows a network to be optimized for processing incredibly large amounts of data with minimal delay (or latency) . The networks need to adapt to a broad amount of changing data in real time. 5G may enable this service to function effectively. URLLC is, arguably, the most promising addition to upcoming 5G capabilities, but may also be the hardest to secure. URLLC requires a quality of service (QoS) totally different from mobile broadband services. It may provide networks with instantaneous and intelligent systems, though it will require transitioning out of the core network.

As shown in FIG. 3, a flow chart of a HARQ feedback method according to another embodiment is provided. The method in the present embodiment may include following blocks.

At block S210, the UE receives the first timing parameter transmitted from the base station.

Compared to the embodiment shown in FIG. 2, a subject for performing the method in the present embodiment may be the UE, and a subject for performing the method in the embodiment of FIG. 2 may be the base station. Common features or portions shown in the present embodiment and the embodiment of FIG. 2 may refer to the description of FIG. 2 and will not be repeatedly described hereinafter.

The first timing parameter is configured to indicate a time interval between the first time unit for the UE receiving the downlink transmission and the second time unit for the UE transmitting the HARQ feedback signal of the downlink transmission to the base station.

At block S220, the UE may determine that the confliction occurs in an attempt to transmit the HARQ feedback signal.

In details, the UE determines that the confliction occurs between the attempt to transmit the HARQ feedback signal and time division duplex (TDD) configuration, resulting in failure of transmitting the HARQ feedback signal of SPS PDSCH.

At block S230, the UE transmits a report of the occurrence of the confliction to the base station.

Operations of S220-S230 may be omitted in response to the base station itself determining the occurrence of the confliction.

At block S240, the UE receives the DCI transmitted from the base station, and the DCI carries the second timing parameter.

The second timing parameter is different from the first timing parameter and is configured to adjust the second time unit to avoid the confliction which occurs in the attempt to transmit the HARQ feedback signal by the UE.

At block S250, the UE transmits the HARQ feedback signal of the downlink transmission to the base station at an adjusted second time unit.

The adjusted second time unit is determined based on the second timing parameter. According to the present embodiment, in response to the occurrence of the confliction in transmitting the HARQ feedback signal, a new timing parameter (i.e., the second timing parameter) is configured to adjust the second time unit for the UE to transmit the HARQ feedback signal. In this way, a possibility of the HARQ feedback signal being dropped due to the confliction may be reduced, and the performance of the PDSCH (such as SPS PDSCH) may be improved.

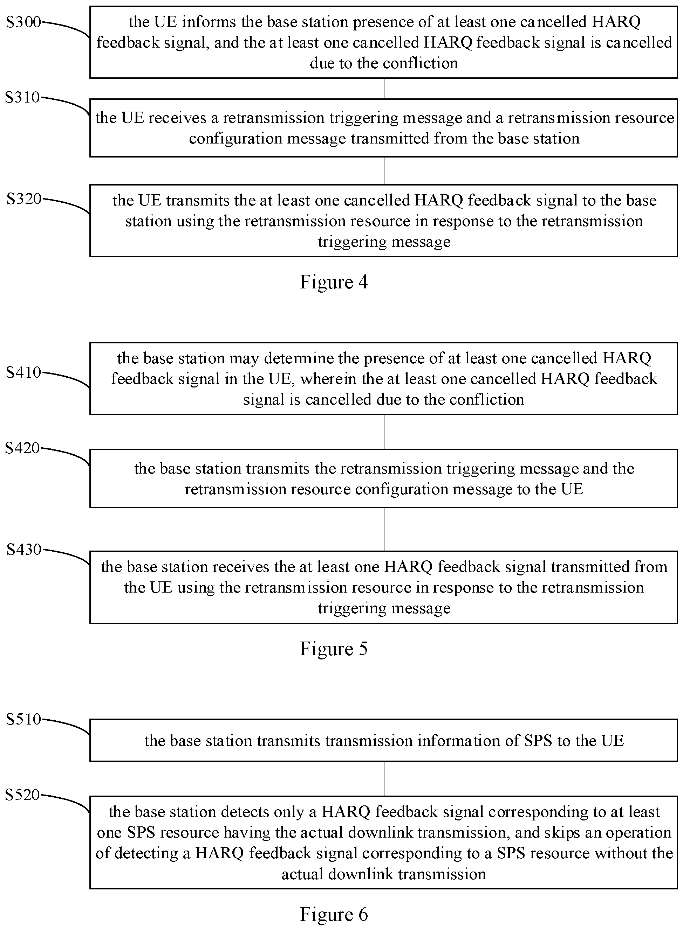

As shown in FIG. 4, a flow chart of a HARQ feedback method according to yet another embodiment is provided. In the embodiment of FIG. 4, the method may include following blocks.

At block S300, the UE informs the base station presence of at least one cancelled HARQ feedback signal, and the at least one cancelled HARQ feedback signal is cancelled due to the confliction.

The confliction may include at least one of: confliction between the HARQ feedback signal and time division duplex (TDD) configuration and /or confliction between the HARQ feedback signal and intra-UE uplink transmission. In response to the confliction being the confliction between SPS PDSCH and TDD configuration, the base station may determine the presence of a cancelled HARQ-ACK feedback by itself, and the operation S300 may not be performed. The cancelled HARQ-ACK feedback may be cancelled due to the confliction.

At block S310, the UE receives a retransmission triggering message and a retransmission resource configuration message transmitted from the base station.

Considering compatibility with the previous releases, a triggering mechanism is required to determine whether to perform the retransmission of at least one cancelled HARQ-ACKs. The base station may transmit the retransmission triggering message to the UE, and configure whether to allow retransmission of the cancelled HARQ-ACK. This retransmission triggering message may be carried by DCI or a higher layer signal (e.g. RRC) . Therefore, a new parameter RetransCancelledHARQ may be defined. When the base station configures the parameter RetransCancelledHARQ to the UE, the UE packs the at least one cancelled HARQ-ACKs and retransmits them to the base station.

The retransmission resource message configures the retransmission resource for the UE, and the retransmission resource is an uplink resource configured for retransmitting the at least one cancelled feedback signals. The retransmission resource may be a newly configured uplink resource dedicated for retransmitting the cancelled HARQ-ACKs. Alternatively, the retransmission resource may multiplex the cancelled HARQ feedback signal with the existing PUCCH or PUSCH. When a multiplexing method is adopted, the base station should also consider the cancelled HARQ feedback signal when configuring existing resources, and configure sufficient uplink resources for retransmitting the cancelled HARQ feedback signals.

Regarding the configuration of retransmission resources for the cancelled HARQ feedback signals due to conflictions with TDD configuration, two factors may be referred to. One of the two factors is the configuration of TDD, and the other is the number of SPS PDSCHs that are actually transmitted (i.e., actual SPS PDSCH transmission). The base station is informed that the confliction exists, so based on the number of confliction in a certain time window, the base station may configure uplink resources based on this information. On this basis, there is also a delay during the base station transmitting signals to the UE. During this period, new confliction may also occur. Therefore, the base station may transmit based on the TDD configuration and the actual SPS PDSCH transmission, considering extra resource configuration when allocating uplink resources. For the retransmission resources for the cancelled HARQ feedback signal due to intra-UE UL transmission confliction, the base station may configure the retransmission resource based on the confliction reported by the UE, and consider an extra uplink resource for new confliction which may occur in the delay.

At block S320, the UE transmits the at least one cancelled HARQ feedback signal to the base station using the retransmission resource in response to the retransmission triggering message.

The UE uses the retransmission resource to transmit at least a part of the at least one cancelled HARQ feedback signal, which is present before the retransmission triggering message being received and is cancelled due to the confliction, to the base station.

For HARQ-ACK feedback, a default scheme refers to the base station considering transmission failure and automatically starting a retransmission mechanism in response to the UE not transmitting the feedback signal within a predetermined time.

Considering the timeliness of the HARQ-ACK feedback, when the interval between receiving the SPS PDSCH and performing HARQ-ACK feedback is excessively long, performing the retransmission is unnecessary. Therefore, a new parameter RetransCancelledHARQWin is introduced to indicate a time range for the UE. When the cancelled HARQ feedback signal exceeds the time range, the feedback signal is not required. For example, when the UE is configured with SPS PDSCH, the HARQ feedback signal corresponding to the SPS PDSCH conflicts with the TDD configuration and is determined to be cancelled. The UE does not receive the retransmission triggering parameter RetransCancelledHARQ within the RetransCancelledHARQWin time after receiving the SPS PDSCH, and the cancelled HARQ feedback signal responding to the SPS PDSCH will not be retransmitted. In addition, referring to the rules shown in the embodiment of FIG. 2, the time window may also be defined by a maximum value of k1. When the cancelled HARQ feedback signal is not retransmitted within the maximum value range of k1, the HARQ feedback signal may be dropped.

In another embodiment, when the cancelled HARQ feedback signal is a NACK, the base station may start the retransmission mechanism even if the UE does not provide the HARQ feedback signal. In another embodiment, when the cancelled HARQ feedback signal is an ACK HARQ feedback signal, a waste of resources may be generated in response to the UE not providing the feedback in time and the base station starting retransmission. Therefore, the retransmission may only occur when the cancelled HARQ feedback signal is an ACK. When the cancelled HARQ feedback signal is NACK, retransmission may not be performed, which correspondingly improves resource utilization. Alternatively, on the basis of the above embodiment, all cancelled HARQ feedback signals may be retransmitted only when the majority of them are ACKs or as long as an ACK is present. Further, when all the cancelled HARQ feedback signals are NACKs, retransmission may not be performed.

Therefore, before the retransmission is performed, the number of first cancelled HARQ feedback signals from the at least one cancelled HARQ feedback signals and/or a ratio of the number of the first cancelled HARQ feedback signals to a total number of the at least one cancelled HARQ feedback signals are obtained, wherein the first cancelled HARQ feedback signals meet a transmitting condition. The UE may determine whether the number and/or the ratio of the first cancelled HARQ feedback signals meets a predefined condition. The transmitting condition includes at least one of: the first cancelled HARQ feedback signals being ACK HARQ feedback signals; and the first cancelled HARQ feedback signals being present in a specific window before the retransmission triggering message being received. The at least one cancelled HARQ feedback signals may be transmitted to the base station using the retransmission resource in response to the predefined condition being met. The retransmission may be dropped in response to the predefined condition being not met.

Further, in order to reduce consumption of the retransmission resources, the UE may perform a logic operation on at least two cancelled HARQ feedback signals to obtain an operation result, and may transmit the operation result to the base station using the retransmission resource.

According to the present embodiment, in response to the presence of the at least one cancelled HARQ feedback signal, the UE may retransmit the at least one cancelled HARQ signal to the base station. In this way, an unnecessary PDSCH retransmission caused by the confliction of the HARQ feedback signal may be reduced, and the performance of the PDSCH may be improved.

Alternatively, the HARQ feedback method provided by the present embodiment may be applied for URLLC services only. However, the low-priority services may still follow the previous releases of the scheme and drop the cancelled HARQ feedback signals in response to the presence of the confliction.

As shown in FIG. 5, a flow chart of a HARQ feedback method according to yet another embodiment of the present disclosure is provided. The method in the present embodiment may include following blocks.

At block S410, the base station may determine the presence of at least one cancelled HARQ feedback signal in the UE, wherein the at least one cancelled HARQ feedback signal is cancelled due to the confliction.

Compared to the embodiment shown in FIG. 4, a subject to perform the method in the present embodiment is the base station, and a subject to perform the method in the embodiment of FIG. 4 is the UE.Common features or portions in the present embodiment and the embodiment of FIG. 4 may refer to the description of FIG. 4 and will not be repeatedly described hereinafter.

The confliction includes at least one of: confliction between the HARQ feedback signal and time division duplex (TDD) configuration and confliction between the HARQ feedback signal and intra-UE uplink transmission. The base station may receive a notification transmitted by the UE in regard to presence of the at least one cancelled HARQ feedback signal. Alternatively, the base station may determine the presence of a cancelled HARQ feedback signal, which is cancelled due to the confliction between the HARQ feedback signal and the TDD configuration, based on a semi-persistent scheduling (SPS) configuration message and time division duplex (TDD) configuration of the UE.

At block S420, the base station may transmit the retransmission triggering message and the retransmission resource configuration message to the UE.

The retransmission triggering message is carried by the DCI or a wireless resource control signal. The retransmission resource may be a newly configured uplink resource dedicated to retransmitting the at least one cancelled HARQ feedback signals, or may multiplex the at least one cancelled HARQ feedback signals with the existing PUCCH or PUSCH.

At block S430, the base station receives the at least one HARQ feedback signal transmitted from the UE using the retransmission resource in response to the retransmission triggering message.

Alternatively, the retransmission triggering message includes time window information. The at least one cancelled HARQ feedback signal transmitted by the UE may be at least one HARQ feedback signal present in a specific time window before the retransmission triggering message being received. The specific time window may be indicated by the time window information.

Alternatively, in order to reduce the consumption of the retransmission resource, the UE may perform a logic operation (such as a binary AND operation, a binary OR operation) on at least one cancelled HARQ feedback signals to obtain an operation result, and may transmit the operation result to the base station using the retransmission resource.

According to the present embodiment, in response to the presence of the at least one cancelled HARQ feedback signal, the UE may retransmit the at least one cancelled HARQ feedback signal to the base station, wherein the at least one cancelled HARQ feedback signal is cancelled due to the confliction. In this way, an unnecessary retransmission of PDSCH caused by the at least one cancelled HARQ feedback signal may be reduced, and the performance of the PDSCH (such as SPS PDSCH) may be improved.

As show in FIG. 6, a flow chart of a SPS method according to an embodiment of the present disclosure is provided. The method in the present embodiment may include following blocks.

At block S510, the base station transmits transmission information of SPS to the UE.

The SPS PDSCH configuration may be applied to support periodic traffic. Multiple downlink SPS configurations, in conjunction with shorter scheduling periodicities, may reduce the transmission delay of burst services. In some cases, SPS PDSCH resources may be over-configured, resulting in various SPS PDSCH occasions without actual downlink data transmission. According to the existing specification in NR, the UE needs to perform HARQ-ACK feedback on all SPS PDSCHs, even if the downlink data is not actually transmitted, i.e., the SPS PDSCH is skipped. In response to the SPS PDSCH being skipped, the UE may provide a NACK feedback signal to the base station by default. In this way, unnecessary signaling overhead is undoubtedly increased.

In response to a feedback of SPS PDSCH, the UE may adopt an ACK-only mode. That is, the UE may send the ACK only. When the HARQ feedback signal of a SPS PDSCH is a NACK, the HARQ feedback signal is determined to be dropped. As the base station knows whether there is actual downlink data transmission, even if the UE omits all NACK feedback signals, the base station may judge by itself whether the transmission without feedback is a decoding failure or there is no actual downlink data has been transmitted. For the transmission with a decoding failure, the base station may schedule retransmission for the failed transmission. For the transmission without actual downlink data, the base station may ignore the NACK. For triggering this solution, the base station may configure a triggering parameter NACKSkipInd to the UE. For example, when NACKSkipInd = 1, the UE omits the NACK feedback signal; and when NACKSkipInd = 0, the UE may execute the original mechanism.

In the present embodiment, the base station may use the transmission information of SPS to indicate the UE that whether at least one SPS resource has actual downlink transmission. The transmission information of SPS is configured to indicate whether at least one SPS recourse has the actual downlink transmission. The transmission information of SPS may be included in a SPS configuration message or a SPS activation message, or may be indicated by a higher layer parameter. Alternatively, after SPS being activated, the base station may transmit the DCI or the higher layer parameter (such as the RRC parameter), which includes the transmission information of SPS, to the UE. For example, after SPS is activated, the base station may transmit the DCI, which includes the transmission information of SPS, before each configured SPS resource, and in this way, the presence of the actual downlink transmission in the SPS resource may be indicated.

The transmission information of SPS may in a bit format. The transmission information of SPS may include at least one bit, and at least one SPS resource is present. The at least one bit may be in one-to-one correspondence with the at least one SPS resource. A value of each of the at least one bit is set to indicate whether the corresponding SPS resource has the actual downlink transmission. For example, each of the at least one bit being 1 may indicate that the corresponding SPS resource has the actual downlink transmission; and each of the at least one bit being 0 may indicate that the corresponding SPS resource does not have the actual downlink transmission. The base station may use a bitmap to indicate the transmission information of SPS. The bitmap comprises multiple fields, and each field correspond to a SPS resource, and the value of each field in the bitmap indicates whether the corresponding SPS resource has the actual downlink transmission.

The DCI including the transmission information of SPS may be simplified DCI. The simplified DCI may refer to the embodiment shown in FIG. 2. In the present embodiment, the simplified DCI may further include a parameter of indication for whether actual DL data is transmitted. Similarly, parameters that are in the simplified DCI and irrelative to the transmission information of SPS may be omitted, and the simplified DCI may be scrambled by a new radio network tempory identity (RNTI) .

Alternatively, the DCI including the transmission information of SPS may be in a new DCI format. For example, the base station may use RRC information element (IE) TimmingIndPerSPSPDSCH to configure the new DCI format. The SPS transmission information related parameters comprised in the TimmingIndPerSPSPDSCH are shown in table 2.

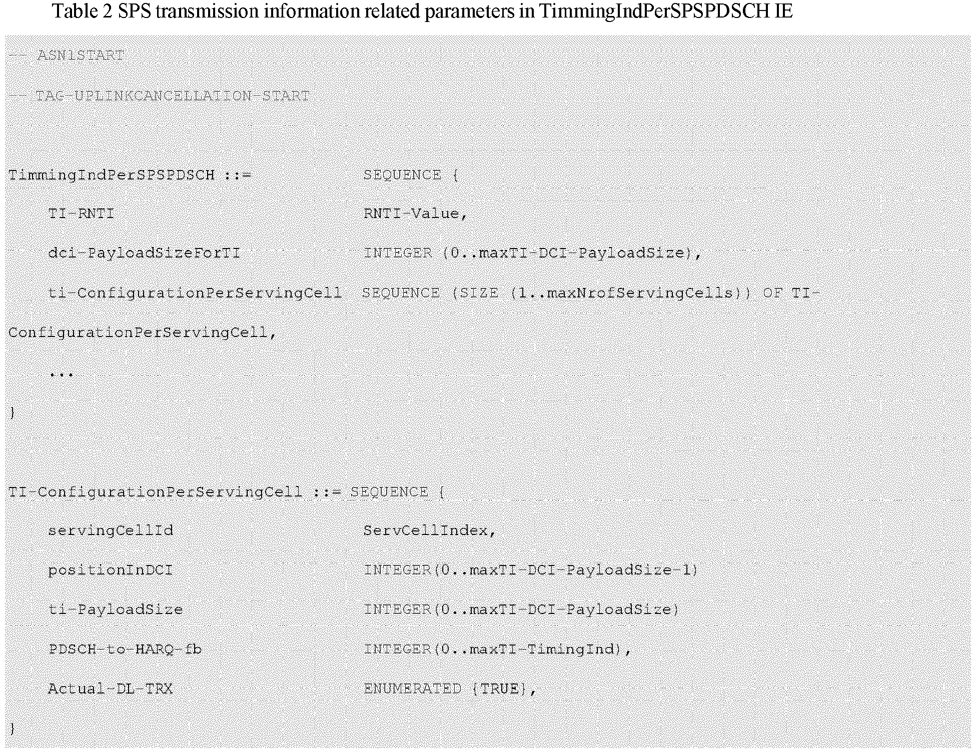

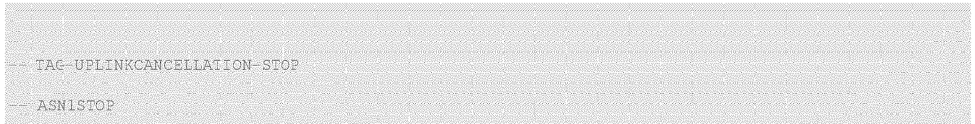

The Actual-DL-TRX in TimmingIndPerSPSPDSCH IE provides SPS transmission information for whether there is actual downlink transmission in SPS PDSCH. For example, the Actual-DL-TRX may be a bitmap configured to indicate the transmission information of SPS. Alternatively, the transmission information of SPS may be carried by other RRC IE.

Referring to the embodiment of FIG. 2, after SPS is activated, the base station may periodically (such as once per SPS period, or once per several SPS periods) transmit the DCI to the UE to indicate HARQ parameters to be used by at least one subsequent SPS PDSCH, and/or indicate whether the subsequent SPS PDSCH has the actual downlink transmission.

At block S520, the base station detects only a HARQ feedback signal corresponding to at least one SPS resource having the actual downlink transmission, and skips an operation of detecting a HARQ feedback signal corresponding to a SPS resource without the actual downlink transmission.

The base station knows the SPS resource that does not have the actual downlink transmission. Irrespective of the UE transmitting the HARQ feedback signal for the SPS resource not having the actual downlink transmission, the base station may skip the operation of detecting the HARQ feedback signal, and may detect the HARQ feedback signal corresponding to the at least one SPS resource having the actual downlink transmission only.

According to the present embodiment, the base station may use the transmission information of SPS to indicate whether the SPS resource corresponding to the UE has the actual downlink transmission. For the SPS PDSCH that does not have the actual downlink transmission, the UE may not transmit the HARQ feedback signal, such that the number of HARQ feedback signals required to be transmitted by the UE may be reduced, utilization of resources may be improved especially when the SPS PDSCH is excessively configured.

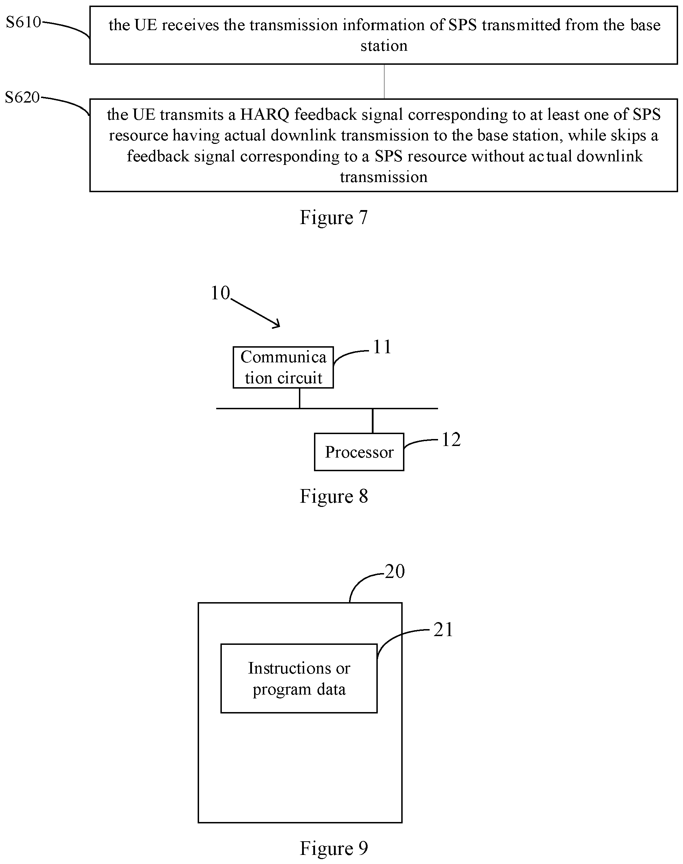

As shown in FIG. 7, a flow chart of a SPS method according to still another embodiment is shown. The method in the present embodiment may include following blocks.

At block S610, the UE may receive the transmission information of SPS transmitted from the base station.

Compared to the embodiment shown in FIG. 2, a subject for performing the method in the present embodiment may be the UE, and a subject for performing the method in the embodiment of FIG. 2 may be the base station. Common features or portions shown in the present embodiment and the embodiment of FIG. 2 may refer to the description of FIG. 2 and will not be repeatedly described hereinafter.

The transmission information of SPS may be included in the SPS configuration message or the SPS activation message, or may be indicated by a higher layer parameter. Alternatively, after the SPS being activated, the base station may transmit the DCI or the higher layer parameter (such as the RRC parameter), which includes the transmission information of SPS, to the UE.

The transmission information of SPS may in a bit format. The transmission information of SPS may include at least one bit, and at least one SPS resource is present. The at least one bit may be in one-to-one correspondence with the at least one SPS resource. A value of each of the at least one bit is set to indicate whether the corresponding SPS resource has the actual downlink transmission. A bitmap may be configured to indicate the transmission information of SPS. The bitmap comprises multiple fields, and each field correspond to a SPS resource, and the value of each field in the bitmap indicates whether the corresponding SPS resource has the actual downlink transmission.

The DCI including the transmission information of SPS may be simplified DCI. The simplified DCI may refer to the embodiment shown in FIG. 2. In the present embodiment, the simplified DCI may further include a parameter of indication for whether actual DL data is transmitted. Similarly, parameters that are in the simplified DCI and irrelative to the transmission information of SPS may be omitted, and the simplified DCI may be scrambled by a new radio network tempory identity (RNTI) . Alternatively, the DCI including the transmission information of SPS may be in a new DCI format.

At block S620, the UE transmits a HARQ feedback signal corresponding to at least one of SPS resource having actual downlink transmission to the base station, while skips a feedback signal corresponding to a SPS resource without actual downlink transmission.

According to the present embodiment, the base station may use the transmission information of SPS to indicate whether the SPS resource corresponding to the UE has the actual downlink transmission. For the SPS PDSCH that does not have the actual downlink transmission, the UE does not transmit the corresponding HARQ feedback signal, and the base station does not detect the corresponding HARQ feedback signal. In this way, the number of HARQ feedback signals that the UE needs to transmit may be reduced, and utilization of resources may be improved, especially when the SPS PDSCH is excessively configured.

Referring to FIG. 8, FIG. 8 is a structural schematic view of a communication apparatus according to an embodiment of the present disclosure. The DCI scheduling device 10 includes a processor 12 and a communication circuit 11; the processor 12 is connected to the communication circuit 11, and the processor 12 is configured to execute instructions to implement the aforementioned method of scheduling DCI.

The processor 12 may comprise one or more instances of a processing circuit, i.e., a Central Processing Unit (CPU) , a processing unit, a processing circuit, a processor, an Application Specific Integrated Circuit (ASIC) , a microprocessor, or other processing logic that may interpret and execute instructions. The herein utilized expression processor " may thus represent a processing circuitry comprising a plurality of processing circuits, such as, e.g., any, some or all of the ones enumerated above.

Referring to FIG. 9, FIG. 9 is a structural schematic view of a non-transitory storage medium according to an embodiment of the present disclosure. The memory stores instructions or program data 21 which can implement the method proposed by the fourteenth embodiment of the paging method according to the present disclosure while executed. The memory 12 may be a read-only memory (ROM) , a random-access memory (RAM) , a flash memory, a hard disk, or an optical disk, etc.

According to the embodiments of the present disclosure, it should be understood that, the method and the apparatus may be achieved by other means. For example, the apparatus illustrated in the above embodiments are exemplary only. For example, modules or units may be divided based on logic functions. Practically, the modules and the units may be divided by other means. For example, a plurality of units or assemblies may be combined or integrated into another system. Alternatively, some features may be omitted or may not be implemented. Further, coupling, direction coupling, or communicative connection as shown or discussed in the above may be achieved via some interfaces. The coupling or communicative connection between apparatuses or units may be electrical, mechanical, or in other forms.

The unit which is described as a separated component may be physically or non-physically separated. A component shown as a unit may be or may not be a physical unit. That is, the unit may be located at a position or distributed at a plurality of network units. Based on actual needs, a part of or all of the units may be selected to be arranged to achieve objectives of the present disclosure.

In addition, each functional unit of each embodiment may be integrated into one processing unit. Alternatively, each functional unit may be configured independently. Alternatively, two or more functional units may be integrated into one unit. The integrated unit may be achieved in a form of hardware or in a form of a software functional unit.

When the integrated unit is achieved in the form of the software functional unit and is sold or used as an independent product, the integrated unit may be stored in a computer-readable non-transitory storage medium. Therefore, essence of the present disclosure, a portion of the present disclosure contributive to the art, or the entirety of the present disclosure may be achieved in the form of the software product. The computer software product is stored in a non-transitory storage medium and includes a plurality of instructions, and the plurality of instructions are configured to enable a computing device (may be a personal computer, a server, a network device, or the like) or a processor to perform some of or all of the operations of the methods shown in the embodiments of the present disclosure. The above-mentioned non-transitory storage medium be any medium able to store a program code, such as: a universal serial bus disk, a portable hard drive, a read-only memory (ROM) , a random access memory (RAM) , a magnetic disk, an optical disk, or the like.

The above description shows implementations of the present disclosure but does not limit the patent scope of the present disclosure. Any equivalent structural or process transformation obtained based on the description and the drawings of the present disclosure, applied directly or indirectly in other related art, should be included in the patent scope of the present disclosure.

## Claims

1. A hybrid automatic repeat request (HARQ) feedback method, comprising: receiving, by a user equipment (UE) , a retransmission triggering message and retransmission resource configuration transmitted from a base station; and transmitting, by the UE, at least one cancelled HARQ feedback signal to the base station using the retransmission resource in response to the retransmission triggering message, wherein the at least one cancelled HARQ feedback signal is cancelled due to confliction.

2. The HARQ feedback method according to claim 1, wherein before the receiving, by the user equipment (UE) , the retransmission triggering message transmitted from the base station, the method further comprises: informing, by the UE, the base station presence of the at least one cancelled HARQ feedback signal.

3. The HARQ feedback method according to claim 1, wherein the confliction comprises at least one of: confliction between the HARQ feedback signal and time division duplex (TDD) configuration and confliction between the HARQ feedback signal and intra-UE uplink transmission.

4. The HARQ feedback method according to claim 1, wherein the retransmission triggering message is carried in downlink control information (DCI) or a radio resource control (RRC) signal.

5. The HARQ feedback method according to claim 1, wherein the transmitting, by the UE, at least one cancelled HARQ feedback signal to the base station using the retransmission resource, comprises: using the retransmission resource to transmit at least a part of the at least one cancelled HARQ feedback signal, which is present before the retransmission triggering message being received and is cancelled due to the confliction, to the base station.

6. The HARQ feedback method according to claim 1, wherein the transmitting, by the UE, at least one cancelled HARQ feedback signal to the base station using the retransmission resource, comprises: using the retransmission resource to transmit at least a part of the at least one cancelled HARQ feedback signal, which is present in a specified time window before the retransmission triggering message being received and is cancelled due to the confliction, to the base station.

7. The HARQ feedback method according to claim 1, wherein the transmitting, by the UE, at least one cancelled HARQ feedback signal to the base station using the retransmission resource, comprises: using the retransmission resource to transmit an acknowledge (ACK) HARQ feedback signal of the at least one cancelled HARQ feedback signal to the base station.

8. The HARQ feedback method according to claim 1, wherein the number of the at least one cancelled HARQ feedback signal is two or more, and the transmitting, by the UE, at least one cancelled HARQ feedback signal to the base station using the retransmission resource, comprises: performing a logic operation on the two or more cancelled HARQ feedback signals, to obtain an operation result; and transmitting, by the UE, the operation result to the base station using the retransmission resource.

9. The HARQ feedback method according to claim 3, wherein before the transmitting, by the UE, at least one cancelled HARQ feedback signal to the base station using the retransmission resource, the method further comprises: obtaining the number of first cancelled HARQ feedback signals from the at least one cancelled HARQ feedback signals and/or a ratio of the number of the first cancelled HARQ feedback signals to a total number of the at least one cancelled HARQ feedback signals, wherein the first cancelled HARQ feedback signals meet a transmitting condition; determining whether the number and/or the ratio of the first cancelled HARQ feedback signals meets a predefined condition; wherein the transmitting condition comprises at least one of: the first cancelled HARQ feedback signals being ACK HARQ feedback signals; and the first cancelled HARQ feedback signals being present in a specific window before the retransmission triggering message being received; transmitting at least part of the at least one cancelled HARQ feedback signals to the base station using the retransmission resource in response to the predefined condition being met; and dropping retransmission in response to the predefined condition being not met.

10. A hybrid automatic repeat request (HARQ) feedback method, comprising: determining, by a base station, that a user equipment (UE) has at least one cancelled HARQ feedback signal, wherein the at least one cancelled HARQ feedback signal is cancelled due to confliction; transmitting, by the base station, a retransmission message and retransmission resource configuration information to the UE; and receiving, by the base station, the at least one cancelled HARQ feedback signal, which is transmitted by the UE using the retransmission resource in response to the retransmission triggering message.

11. The HARQ feedback method according to claim 10, wherein the determining, by a base station, that a user equipment (UE) has at least one cancelled HARQ feedback signal, comprises: receiving, by the base station, a notification transmitted by the UE in regard to presence of the at least one cancelled HARQ feedback signal.

12. The HARQ feedback method according to claim 10, wherein the determining, by a base station, that a user equipment (UE) has at least one cancelled HARQ feedback signal, comprises: determining, by the base station, presence of the at least one cancelled HARQ feedback signal based on semi-persistent scheduling (SPS) configuration and time division duplex (TDD) configuration of the UE.

13. The HARQ feedback method according to claim 10, wherein the confliction comprises at least one of: confliction between the at least one cancelled HARQ feedback signal and the time division duplex (TDD) configuration; and confliction between the at least one cancelled HARQ feedback signal and intra-UE uplink transmission.

14. The HARQ feedback method according to claim 10, wherein the retransmission triggering message is carried in downlink control information (DCI) or a radio resource control (RRC) signal.

15. The HARQ feedback method according to claim 10, wherein the retransmission triggering message comprises time window information, and the UE transmitting the at least one cancelled HARQ feedback signal using the retransmission resource comprises: receiving, by the base station, the at least one cancelled HARQ feedback signal, which is transmitted by the UE using the retransmission resource in response to the retransmission triggering message, and present in a specific time window before the retransmission triggering message being received, wherein the specific time window is indicated by the time window information.
